# EUROPEAN PATENT SPECIFICATION

(11) **EP 2 916 382 B1**
(45) Date of publication and mention of the grant of the patent: **01.03.2017**
(21) Application number: 13850008.7
(22) Date of filing: 17.10.2013
(51) Int. Cl.: H01M 10/647, H01M 10/04, H01M 2/10, H01M 10/6556, H01M 10/6555, H01M 10/613

(54) **BATTERY CELL ASSEMBLY AND METHOD FOR MANUFACTURING COOLING FIN FOR BATTERY CELL ASSEMBLY**
BATTERIEZELLENANORDNUNG UND VERFAHREN ZUR HERSTELLUNG VON KÜHLRIPPEN FÜR DIE BATTERIEZELLENANORDNUNG
ENSEMBLE D'ÉLÉMENTS DE BATTERIE ET PROCÉDÉ DE FABRICATION D'AILETTE DE REFROIDISSEMENT POUR ENSEMBLE D'ÉLÉMENTS DE BATTERIE

(30) Priority: 31.10.2012 US 201213665204
(43) Date of publication of application: 09.09.2015
(73) Proprietor: LG Chem, Ltd., Seoul 150-721 (KR)
(72) Inventor: MERRIMAN, Robert, Shelby Township, Michigan 48315 (US); NIELSON, Michael, Royal Oak, Michigan 48067 (US); ISAYEV, Igor, Farmington Hills, Michigan 48334 (US); KETKAR, Satish, Troy, Michigan 48098 (US)
(74) Representative: Cabinet Plasseraud
(86) International application number: PCT/KR2013/009275
(87) International publication number: WO 2014/069819

(56) References cited:
- EP-A1- 1 274 137
- EP-A2- 1 764 573
- WO-A2-2011/145830
- WO-A2-2011/146919
- KR-A- 20070 117 841
- KR-A- 20110 080 537
- KR-A- 20120 006 136
- US-A1- 2001 033 148
- US-A1- 2011 151 303
- US-A1- 2012 171 523
- US-B2- 6 703 160

## Description

### BACKGROUND

A metal or graphite cooling plate; such as the one disclosed in WO 2011/146919, has been disposed against a battery cell to cool the battery cell. However, the inventors have recognized that a side of the metal cooling plate may have an abrasive residue formed thereon which can undesirably rub against an adjacent battery cell.

Another battery cell assembly known from prior art is disclosed in EP1274137 A1. Accordingly, the inventors herein have recognized a need for an improved battery cell assembly and a method for manufacturing a cooling fin in the battery cell assembly that minimizes and/or eliminates the above-mentioned deficiency.

### SUMMARY

A battery cell assembly in accordance with the invention is defined by the features of claim 1. The battery cell assembly includes a cooling fin having a tube and a flexible thermally conductive sheet disposed on the tube. The tube has first, second, and third tube portions fluidly communicating with one another. The first and second tube portions are substantially parallel to one another. The third tube portion is substantially perpendicular to the first and second tube portions and extends between the first and second tube portions. The flexible thermally conductive sheet is coupled to at least the first and second tube portions and has a first sheet portion extending between the first and second tube portions. The battery cell assembly further includes a battery cell disposed against the first sheet portion of the flexible thermally conductive sheet of the cooling fin.

A method for manufacturing a cooling fin of a battery cell assembly in accordance with the invention is defined by the features of claim 11. The method includes
providing a tube having at least first, second, and third tube portions fluidly communicating with one another. The first and second tube portions are substantially parallel to one another. The third tube portion is substantially perpendicular to the first and second tube portions and extends between the first and second tube portions. The method further includes providing a flexible thermally conductive sheet having first, second, and third coupling portions, and first, second, third, and fourth sheet portions. The method further includes coupling the first coupling portion around an outer surface of the first tube portion utilizing the adhesive layer, and coupling the second coupling portion around an outer surface of the second tube portion utilizing the adhesive layer, such that the first sheet portion extends between the first and second tube portions. The method further includes coupling the third coupling portion around an outer surface of the third tube portion utilizing the adhesive layer. The method further includes coupling the second, third, and fourth sheet portions to the first sheet portion utilizing the adhesive layer.

### BRIEF DESCRIPTION OF THE DRAWINGS

FIG. 1 is a schematic of a battery cell assembly in accordance with an exemplary embodiment;
FIG. 2 is an exploded view of the battery cell assembly of FIG. 1;
FIG. 3 is another schematic of the battery cell assembly of FIG. 1;
FIG. 4 is a schematic of a cooling fin utilized in the battery cell assembly of FIG. 1;
FIG. 5 is a schematic of a tube utilized in the cooling fin of FIG. 4;
FIG. 6 is a schematic of a flexible thermally conductive sheet utilized in the cooling fin of FIG. 4;
FIG. 7 is a cross-sectional view of a portion of the cooling fin of FIG. 4;
FIG. 8 is a schematic of a portion of the cooling fin of FIG. 4;
FIG. 9 is a cross-sectional schematic of a portion of the cooling fin of FIG. 4; and
FIG. 10 is a flowchart of a method for manufacturing the cooling fin of FIG. 4 in accordance with another exemplary embodiment.

### DETAILED DESCRIPTION

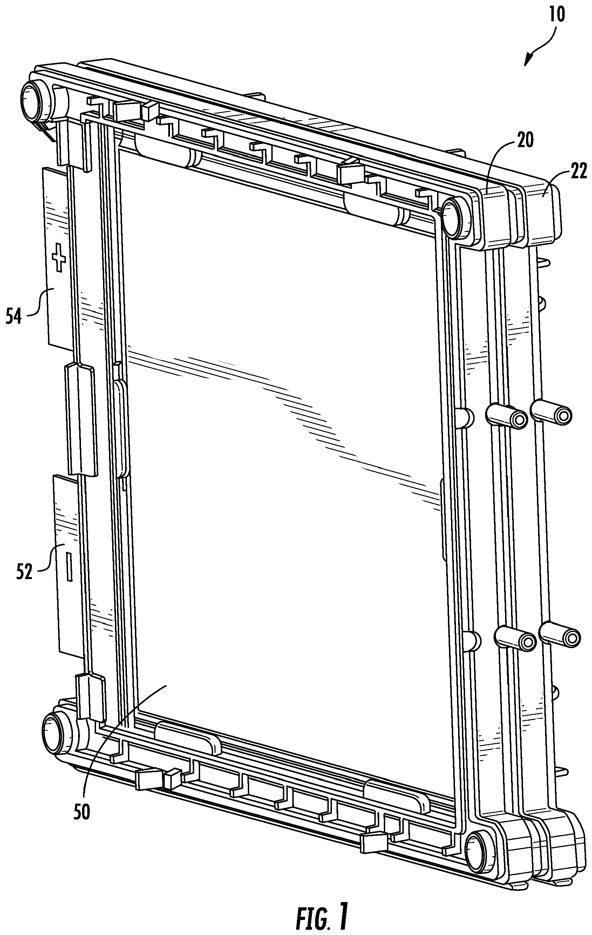

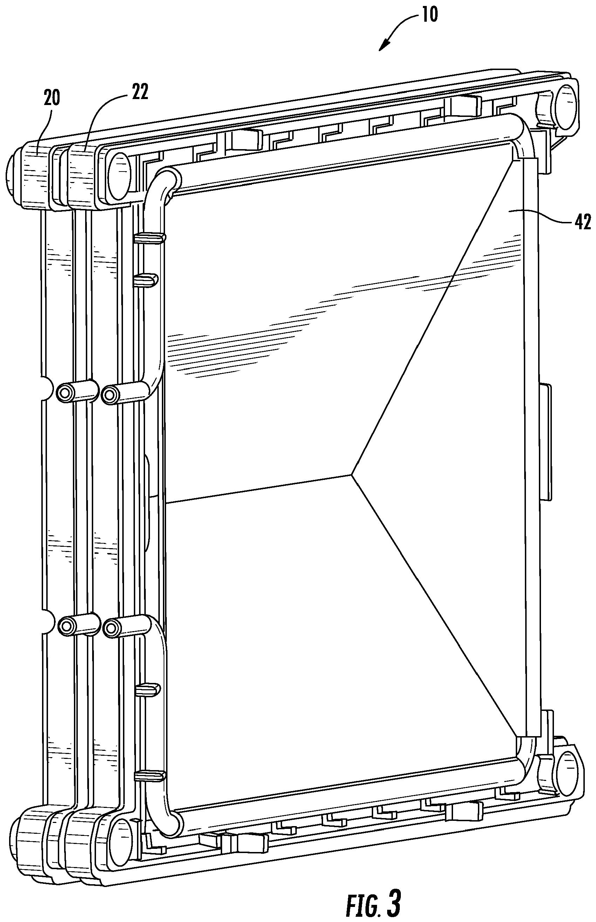

Referring to FIGS. 1-3, a battery cell assembly 10 in accordance with an exemplary embodiment is provided. The battery cell assembly 10 includes rectangular ring-shaped frame members 20, 22, battery cells 30, 32, and cooling fins 40, 42. An advantage of the battery cell assembly 10 is that the assembly 10 utilizes a cooling fin 40 having a flexible thermally conductive sheet 84 which is easily manufactured and has excellent thermal characteristics for conducting heat energy from the battery cells to a tube 82 of the cooling fin 40.

The rectangular ring-shaped frame members 20, 22 are configured to be coupled together to hold the battery cells 30, 32 and the cooling fin 40 therebetween. In one exemplary embodiment, the rectangular ring-shaped frame members 20, 22 are constructed of plastic. However, in alternative embodiments, the rectangular ring-shaped frame members 20, 22 could be constructed of other materials known to those skilled in the art.

The battery cells 30, 32 are each configured to generate an operational voltage. In one exemplary embodiment, each of the battery cells 30, 32 are pouch-type lithium-ion battery cells. Of course, other types of battery cells known to those skilled in the art could be utilized. Also, in an exemplary embodiment, the battery cells 30, 32 are electrically coupled in series to one another.

The battery cell 30 includes a rectangular-shaped pouch 50 and electrodes 52, 54 extending from the pouch 50. The battery cell 30 is disposed between the rectangular ring-shaped frame member 20 and the cooling fin 40.

The battery cell 32 has an identical structure as the battery cell 30. The battery cell 32 is disposed between the rectangular ring-shaped frame member 22 and the cooling fin 40.

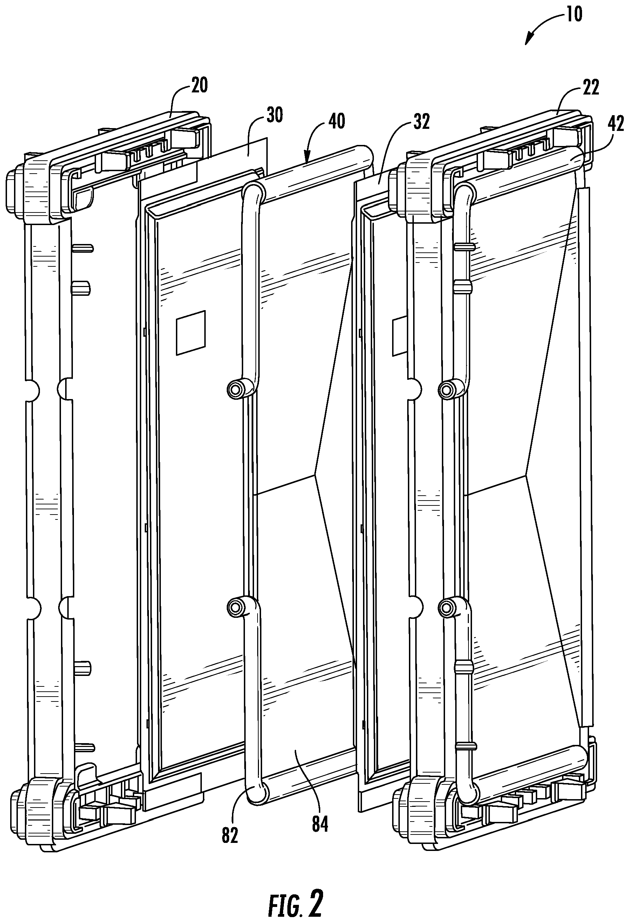

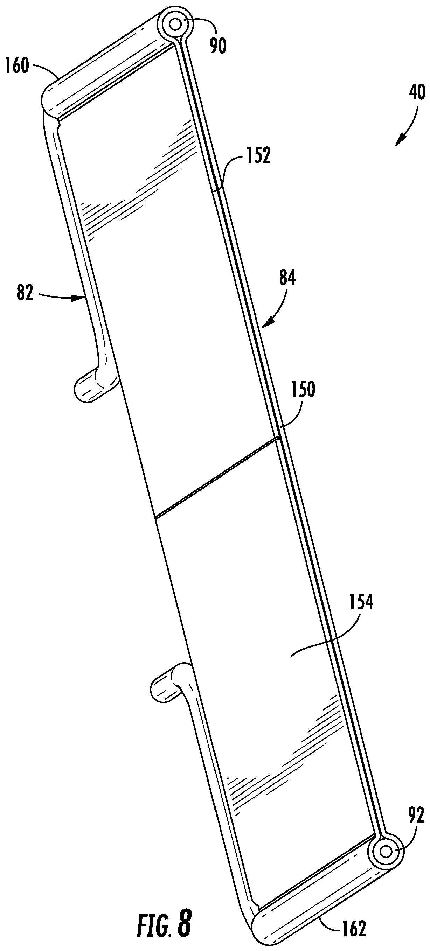

Referring to FIGS. 2-8, the cooling fin 40 is disposed between the battery cells 30, 32 and is configured to transfer heat energy from the battery cells 30, 32 to a refrigerant or a liquid flowing through the cooling fin 40 to cool the battery cells 30, 32. The cooling fin 40 includes a tube 82 and a flexible thermally conductive sheet 84.

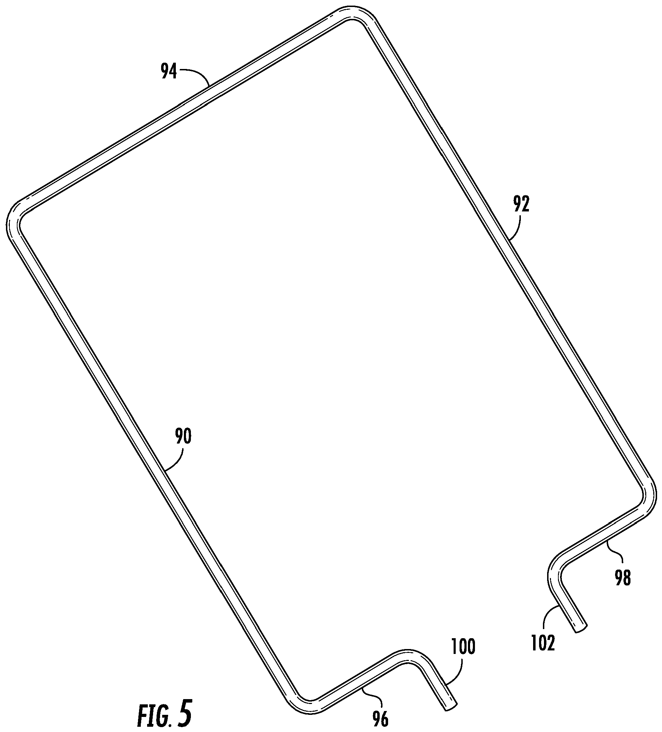

Referring to FIG. 5, the tube 82 is configured to transfer at least a portion of the heat energy to a liquid or a refrigerant flowing through the tube 82. The tube 82 includes a first tube portion 90, a second tube portion 92, a third tube portion 94, a fourth tube portion 96, a fifth tube portion 98, the sixth tube portion 100, and a seventh tube portion 102 that fluidly communicate with one another. The first and second tube portions and 90, 92 are substantially parallel to one another. The third tube portion 94 is substantially perpendicular to the first and second tube portions 90, 92 and extends between the first and second tube portions 90, 92. The fourth and fifth tube portions 96, 98 extend from the first and second tube portions 90, 92, respectively, and are substantially perpendicular to the first and second tube portions 90, 92, respectively. The sixth and seventh tube portions 100, 102 extend from the fourth and fifth tube portions 96, 98, respectively, and are substantially perpendicular to the fourth and fifth tube portions 96, 98, respectively. In one exemplary embodiment, the tube 82 is constructed of aluminum. However, the tube 82 could be constructed of other materials known to those skilled in the art.

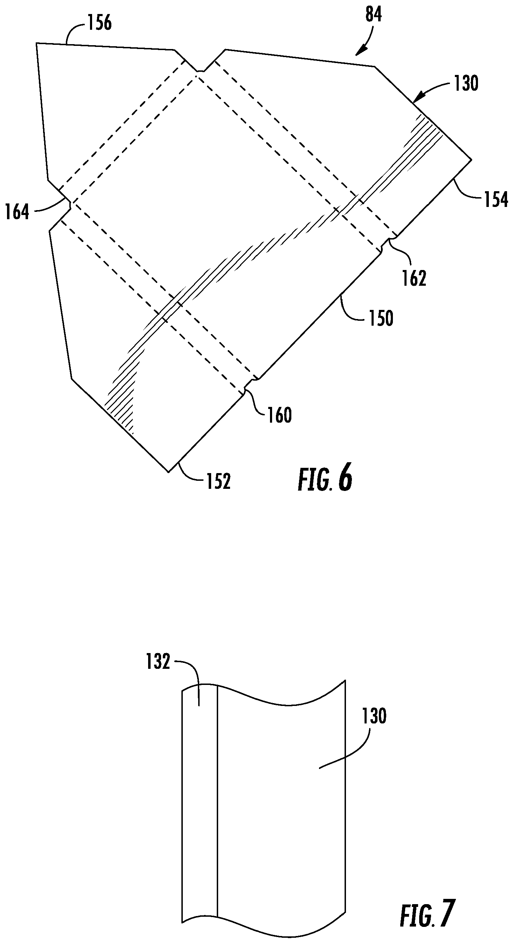

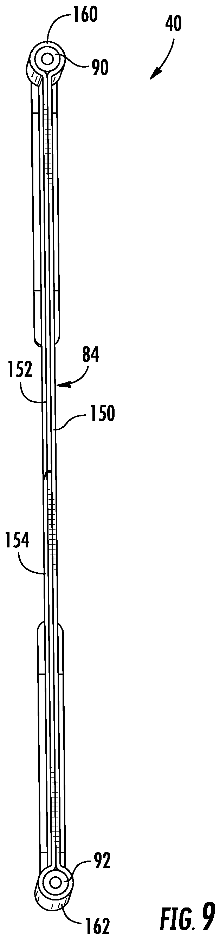

Referring to FIGS. 2 and 6-9, the flexible thermally conductive sheet 84 is configured to transfer heat energy from the battery cells 30, 32 to the tube 82. The flexible thermally conductive sheet 84 includes a flexible layer 130 and an adhesive layer 132 (shown in FIG. 7) disposed on the flexible layer 130.

In one exemplary embodiment, the flexible layer 130 is constructed at least in part utilizing graphite having a thickness in a range of 0.25-0.5 millimeters. Further, the sheet 84 has an in-plane heat conductivity of greater than 200 Watts/meter - Kelvin. Also, in one exemplary embodiment, a side of the flexible layer 130 contacting the battery cell 30 has a roughness average (RA) in a range of 0.8-4.0 micro inches (0.02032-0.1016 µm). Of course, in an alternative embodiment, the flexible layer 130 could have an RA less than 0.8 or greater than 4.0. Of course, in alternative embodiments, the flexible layer 130 could have other shapes and sizes known to those skilled in the art. The flexible layer 130 is configured to transfer heat energy from the battery cell 30 to the tube 82. In particular, for example, the flexible layer 130 could comprise "Spreadershield SS-400" manufactured by GrafTech International Holdings Inc.

Referring to FIG. 6, in one exemplary embodiment, the flexible layer 130 includes a first sheet portion 150, a second sheet portion 152, a third sheet portion 154, a fourth sheet portion 156, a first coupling portion 160, a second coupling portion 162, and a third coupling portion 164. The first coupling portion 160 is disposed between the first sheet portion 150 and the second sheet portion 152. The second coupling portion 162 is disposed between the first sheet portion 150 and the third sheet portion 154. The third coupling portion 164 is disposed between the first sheet portion 150 and the fourth sheet portion 156.

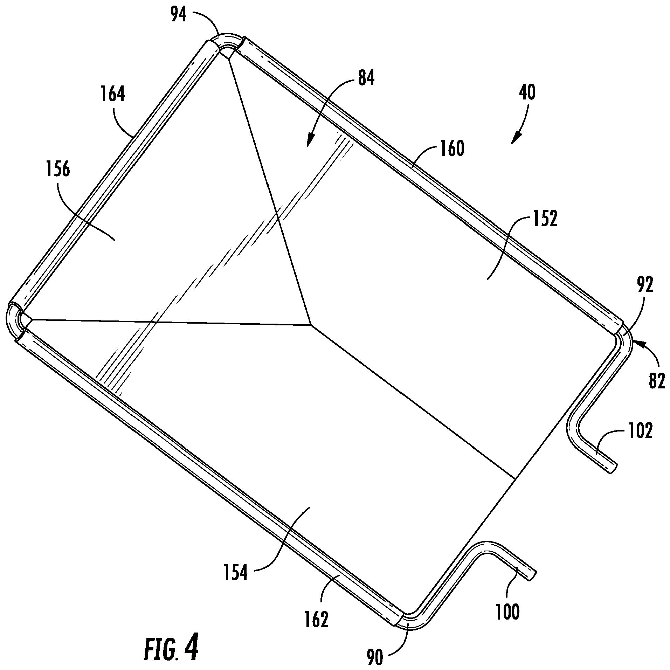

Referring to FIGS. 4-9, during installation of the flexible thermally conductive sheet 82 on the tube 84, the first and second coupling portions 160, 162 are disposed on and around substantially the entire first and second outer surfaces, respectively, of the first and second tube portions 90, 92, respectively, utilizing the adhesive layer 132. The first sheet portion 150 is coupled to the first and second coupling portions 160, 162 and extends between the first and second tube portions 90, 92. The first sheet portion 150 is sized to be disposed against a generally rectangular-shaped side surface of the battery cell 30 and to cover substantially the entire generally rectangular-shaped side surface of the battery cell 30. The second sheet portion 152 extends from the first coupling portion 160 and the first tube portion 90 and is coupled to the first sheet portion 150 utilizing the adhesive layer 132. The third sheet portion 154 extends from the second coupling portion 162 and the second tube portion 92 and is coupled to the first sheet portion 150 utilizing the adhesive layer 132. The third coupling portion 164 is disposed on and around substantially an entire outer surface of the third tube portion 94 utilizing the adhesive layer 132. The fourth sheet portion 156 is coupled to the third coupling portion 164 extends from the third tube portion 94 and is coupled to the first sheet portion 150 utilizing the adhesive layer 132.

Referring to FIG. 7, in one exemplary embodiment, the adhesive layer 132 is a pressure sensitive adhesive disposed on one side of the flexible layer 130.

Referring to FIG. 2, the cooling fin 42 has an identical structure as the structure of the cooling fin 40. The cooling fin 42 is disposed on the rectangular ring-shaped frame number 22 and against the battery cell 32 and extracts heat energy from the battery cell 32 to a refrigerant or a liquid flowing through the cooling fin 42 to cool the battery cell 32.

Referring to FIGS. 2, 4 and 5, during operation, a refrigerant or a liquid enters the sixth tube portion 100 from a source device and flows through the fourth tube portion 96, the first tube portion 90, the third tube portion 94, the second tube portion 92, the fifth tube portion 98, and the seventh tube portion 102 and exits the seventh tube portion 102 to a receiving device. Heat energy generated by the battery cell 30 is conducted through the flexible thermally conductive sheet 84 to the tube 82. Further, heat energy generated by the battery cell 32 is conducted through the flexible thermally conductive sheet 84 to the tube 82. Further, the heat energy in the tube 82 is conducted into the refrigerant or the liquid flowing through the tube 82. Thus, the refrigerant or the liquid flowing through the tube 82 absorbs the heat energy from the battery cells 30, 32 to reduce a temperature of the battery cell 30, 32.

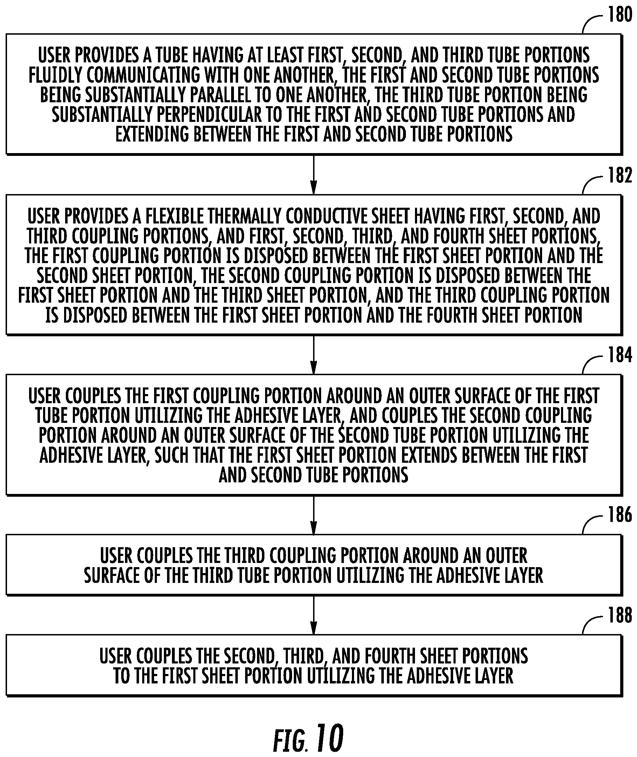

Referring to FIGS. 4-10, a flowchart of a method for manufacturing the cooling fin 40 in accordance with another exemplary embodiment will now be explained.

At step 180, the user provides the tube 82 having at least first, second, and third tube portions 90, 92, 94 fluidly communicating with one another. The first and second tube portions 90, 92 are substantially parallel to one another. The third tube portion 94 is substantially perpendicular to the first and second tube portions 90, 92 and extends between the first and second tube portions 90, 92. After step 180, the method advances to step 182.

At step 182, the user provides the flexible thermally conductive sheet 84 having first, second, and third coupling portions 160, 162, 164, and first, second, third, and fourth sheet portions 150, 152, 154, 156. The first coupling portion 160 is disposed between the first sheet portion 150 and the second sheet portion 152. The second coupling portion 162 is disposed between the first sheet portion 150 and the third sheet portion 154, and the third coupling portion 164 is disposed between the first sheet portion 150 and the fourth sheet portion 156. After step 182, the method advances to step 184.

At step 184, the user couples the first coupling portion 160 around an outer surface of the first tube portion 90 utilizing the adhesive layer 132, and couples the second coupling portion 162 around an outer surface of the second tube portion 92 utilizing the adhesive layer 132, such that the first sheet portion 150 extends between the first and second tube portions 90, 92. After step 184, the method advances to step 186.

At step 186, the user couples the third coupling portion 164 around an outer surface of the third tube portion 94 utilizing the adhesive layer 132. After step 186, the method advances to step 188.

At step 188, the user couples the second, third, and fourth sheet portions 152, 154, 156 to the first sheet portion 150 utilizing the adhesive layer 132.

The battery cell assembly 10 and the method for manufacturing the cooling fin 40 provide a substantial advantage over other battery cell assemblies and methods. In particular, the battery cell assembly 10 and the method provide a technical effect of utilizing a cooling fin 40 with a flexible thermally conductive sheet 84 to extract heat energy from battery cells.

While the claimed invention has been described in detail in connection with only a limited number of embodiments, it should be readily understood that the invention is not limited to such disclosed embodiments. Rather, the claimed invention can be modified to incorporate any number of variations, alterations, substitutions or equivalent arrangements not heretofore described, but which are commensurate with the scope of the invention. Additionally, while various embodiments of the claimed invention have been described, it is to be understood that aspects of the invention may include only some of the described embodiments. Accordingly, the claimed invention is not to be seen as limited by the foregoing description.

## Claims

1. A battery cell assembly (10), comprising:
a cooling fin (40, 42) having a tube (82) and a flexible thermally conductive sheet (84) disposed on the tube (82);
the tube (82) having first, second, and third tube portions (90, 92, 94) fluidly communicating with one another, the first and second tube portions (90, 92) being parallel to one another, the third tube portion (94) being perpendicular to the first and second tube portions (90, 92) and extending between the first and second tube portions (90, 92);
the flexible thermally conductive sheet (84) being coupled to at least the first and second tube portions (90, 92) and having a first sheet portion (150) extending between the first and second tube portions (90, 92); and
a battery cell (30, 32) disposed against the first sheet portion (150) of the flexible thermally conductive sheet (84) of the cooling fin (40, 42),
wherein
the flexible thermally conductive sheet (84) includes an adhesive layer (132) disposed thereon, and is disposed around an outer surface of the first tube portion (90) and is coupled to the first tube portion (90) utilizing the adhesive layer (132),
the flexible thermally conductive sheet (84) is further disposed around an outer surface of the second tube portion (92) and is coupled to the second tube portion (92) utilizing the adhesive layer (132),
**characterised in that**
the flexible thermally conductive sheet (84) further includes second and third sheet portions (152, 154) extending from the first and second tube portions (90, 92), respectively, that are coupled to the first sheet portion (150) utilizing the adhesive layer (132),
the flexible thermally conductive sheet (84) is further disposed around an outer surface of the third tube portion (94) and is coupled to the third tube portion (94) utilizing the adhesive layer (132), and
the flexible thermally conductive sheet (84) further includes a fourth sheet portion (156) that extends from the third tube portion (94) and is coupled to the first sheet portion (150) utilizing the adhesive layer (132).

2. The battery cell assembly (10) of claim 1, wherein the flexible thermally conductive sheet (84) is configured to transfer heat energy from the battery cell (30, 32) to the tube (82).

3. The battery cell assembly (10) of claim 2, wherein the tube is configured to transfer at least a portion of the heat energy to a liquid or a refrigerant flowing through the tube (82).

4. The battery cell assembly (10) of claim 1, wherein the flexible thermally
conductive sheet (84) is disposed around an entire outer surface of the first tube portion (90).

5. The battery cell assembly (10) of claim 1, wherein the tube (82) is an aluminum tube.

6. The battery cell assembly (10) of claim 1, wherein the first sheet portion (150) is sized to cover an entire generally rectangular-shaped side surface of the battery cell (30, 32).

7. The battery cell assembly (10) of claim 1, wherein the flexible thermally conductive sheet (84) has a roughness average in a range of 0.02032-0.1016 µm (0.8-4.0 micro-inches).

8. The battery cell assembly (10) of claim 1, further comprising first and second rectangular-shaped frame members, the cooling fin (40, 42) and the battery cell (30, 32) being disposed between the first and second rectangular-shaped frame members.

9. The battery cell assembly (10) of claim 1, further comprising fourth and fifth tube portions (96, 98) extending from the first and second tube portions (90, 92), respectively, the fourth and fifth tube portions (96, 98) being perpendicular to the first and second tube portions (90, 92), respectively.

10. The battery cell assembly (10) of claim 9, further comprising sixth and seventh tube portions (100, 102) extending from the fourth and fifth tube portions (96, 98), respectively, the sixth and seventh tube portions (100, 102) being perpendicular to the fourth and fifth tube portions (96, 98), respectively.

11. A method for manufacturing a cooling fin (40, 42) of a battery cell assembly (10) as defined in claim 1, comprising:
providing (180) a tube (82) having at least first, second, and third tube portions (90, 92, 94) fluidly communicating with one another, the first and second tube portions (90, 92) being parallel to one another, the third tube portion (94) being perpendicular to the first and second tube portions (90, 92) and extending between the first and second tube portions (90, 92);
providing (182) a flexible thermally conductive sheet (84) having first, second, and third coupling portions (160, 162, 164), and first, second, third, and fourth sheet portions (150, 152, 154, 156);
coupling (184) the first coupling portion (160) around an outer surface of the first tube portion (90) utilizing the adhesive layer (132), and coupling the second coupling portion (162) around an outer surface of the second tube portion (92) utilizing the adhesive layer (132), such that the first sheet portion (150) extends between the first and second tube portions (90, 92);
coupling (186) the third coupling portion (164) around an outer surface of the third tube portion (94) utilizing the adhesive layer (132);
coupling (188) the second, third, and fourth sheet portions (152, 154, 156) to the first sheet portion (150) utilizing the adhesive layer (132).

12. The method of claim 11
, wherein the first coupling portion (160) is disposed
between the first sheet portion (150) and the second sheet portion (152), the second coupling portion (162) is disposed between the first sheet portion (150) and the third sheet portion (154), and the third coupling portion (164) is disposed between the first sheet portion (150) and the fourth sheet portion (156).

## Patentansprüche

1. Batteriezellenanordnung (10), umfassend:
eine Kühlrippe (40, 42), welche ein Rohr (82) und eine flexible, thermisch leitfähige Bahn (84) aufweist, die an dem Rohr (82) angeordnet ist;
wobei das Rohr (82) einen ersten, einen zweiten und einen dritten Rohrbereich (90, 92, 94) aufweist, welche miteinander in Fluidkommunikation stehen, wobei der erste und der zweite Rohrbereich (90, 92) parallel zueinander sind, wobei der dritte Rohrbereich (94) lotrecht zu dem ersten und dem zweiten Rohrbereich (90, 92) ist und sich zwischen dem ersten und dem zweiten Rohrbereich (90, 92) erstreckt;
wobei die flexible, thermisch leitfähige Bahn (84) mit wenigstens dem ersten und dem zweiten Rohrbereich (90, 92) gekoppelt ist und einen ersten Bahnbereich (150) aufweist, welcher sich zwischen dem ersten und dem zweiten Rohrbereich (90, 92) erstreckt; und
eine Batteriezelle (30, 32), welche gegen den ersten Bahnbereich (150) der flexiblen, thermisch leitfähigen Bahn (84) der Kühlrippe (40, 42) angeordnet ist,
wobei
die flexible, thermisch leitfähige Bahn (84) eine darin angeordnete Haftschicht (132) umfasst und um eine äußere Fläche des ersten Rohrbereichs (90) herum angeordnet ist sowie mit dem ersten Rohrbereich (90) unter Verwendung der Haftschicht (132) gekoppelt ist,
die flexible, thermisch leitfähige Bahn (84) ferner um eine äußere Fläche des zweiten Rohrbereichs (92) herum angeordnet ist und mit dem zweiten Rohrbereich (92) unter Verwendung der Haftschicht (132) gekoppelt ist,
**dadurch gekennzeichnet, dass**
die flexible, thermisch leitfähige Bahn (84) ferner einen zweiten und einen dritten Bahnbereich (152, 154) umfasst, welche sich von dem ersten bzw. von dem zweiten Rohrbereich (90, 92) erstrecken und mit dem ersten Bahnbereich (150) unter Verwendung der Haftschicht (132) gekoppelt sind,
die flexible, thermisch leitfähige Bahn (84) ferner um eine äußere Fläche des dritten Rohrbereichs (94) herum angeordnet ist und mit dem dritten Rohrbereich (94) unter Verwendung der Haftschicht (132) gekoppelt ist und
die flexible, thermisch leitfähige Bahn (84) ferner einen vierten Bahnbereich (156) umfasst, welcher sich von dem dritten Rohrbereich (94) erstreckt und mit dem ersten Bahnbereich (150) unter Verwendung der Haftschicht (132) gekoppelt ist.

2. Batteriezellenanordnung (10) nach Anspruch 1, wobei die flexible, thermisch leitfähige Bahn (84) zur Übertragung von Wärmeenergie von der Batteriezelle (30, 32) zu dem Rohr (82) eingerichtet ist.

3. Batteriezellenanordnung (10) nach Anspruch 2, wobei das Rohr zum Übertragen wenigstens eines Teils der Wärmeenergie an eine Flüssigkeit oder an ein Kühlmittel, welche/welches durch das Rohr (82) strömt, eingerichtet ist.

4. Batteriezellenanordnung (10) nach Anspruch 1, wobei die flexible, thermisch leitfähige Bahn (84) um eine gesamte äußere Fläche des ersten Rohrbereichs (90) herum angeordnet ist.

5. Batteriezellenanordnung (10) nach Anspruch 1, wobei das Rohr (82) ein Aluminiumrohr ist.

6. Batteriezellenanordnung (10) nach Anspruch 1, wobei der erste Bahnbereich (150) bemessen ist, um eine gesamte im Allgemeinen rechteckig geformte Seitenfläche der Batteriezelle (30, 32) abzudecken.

7. Batteriezellenanordnung (10) nach Anspruch 1, wobei die flexible, thermisch leitfähige Bahn (84) eine mittlere Rauigkeit im Bereich von 0,02032 - 0,1016 µm (0,8 - 4,0 Mikro-Inch) aufweist.

8. Batteriezellenanordnung (10) nach Anspruch 1, ferner umfassend ein erstes und ein zweites rechteckig geformtes Rahmenelement, wobei die Kühlrippe (40, 42) und die Batteriezelle (30, 32) zwischen dem ersten und dem zweiten rechteckig geformten Rahmenelement angeordnet sind.

9. Batteriezellenanordnung (10) nach Anspruch 1, ferner umfassend einen vierten und einen fünften Rohrbereich (96, 98), welche sich von dem ersten bzw. dem zweiten Rohrbereich (90, 92) erstrecken, wobei der vierte und der fünfte Rohrbereich (96, 98) lotrecht zu dem ersten bzw. dem zweiten Rohrbereich (90, 92) sind.

10. Batteriezellenanordnung (10) nach Anspruch 9, ferner umfassend einen sechsten und einen siebten Rohrbereich (100, 102), welche sich von dem vierten bzw. dem fünften Rohrbereich (96, 98) erstrecken, wobei der sechste und der siebente Rohrbereich (100, 102) lotrecht zu dem vierten bzw. dem fünften Rohrbereich (96, 98) sind.

11. Verfahren zum Herstellen einer Kühlrippe (40, 42) einer Batteriezellenanordnung (10) nach Anspruch 1, umfassend:
Bereitstellen (180) eines Rohres (82), welches wenigstens einen ersten, einen zweiten und einen dritten Rohrbereich (90, 92, 94) aufweist, welche miteinander in Fluidkommunikation stehen, wobei der erste und der zweite Rohrbereich (90, 92) parallel zueinander sind, wobei der dritte Rohrbereich (94) lotrecht zu dem ersten und dem zweiten Rohrbereich (90, 92) ist und sich zwischen dem ersten und dem zweiten Rohrbereich (90, 92) erstreckt;
Bereitstellen (182) einer flexiblen, thermisch leitfähigen Bahn (84), welche einen ersten, einen zweiten und einen dritten Koppelbereich (160, 162, 164) und einen ersten, einen zweiten, einen dritten und einen vierten Bahnbereich (150, 152, 154, 156) aufweist;
Koppeln (184) des ersten Koppelbereichs (160) um eine äußere Fläche des ersten Rohrbereichs (90) herum unter Verwendung der Haftschicht (132) und Koppeln des zweiten Koppelbereichs (162) um eine äußere Fläche des zweiten Rohrbereichs (92) herum unter Verwendung der Haftschicht (132), sodass der erste Bannbereich (150) sich zwischen dem ersten und dem zweiten Rohrbereich (90, 92) erstreckt;
Koppeln (186) des dritten Koppelbereichs (164) um eine äußere Fläche des dritten Rohrbereichs (94) herum unter Verwendung der Haftschicht (132);
Koppeln (188) des zweiten, des dritten und des vierten Bahnbereichs (152, 154, 156) zu dem ersten Bahnbereich (150) unter Verwendung der Haftschicht (132).

12. Verfahren nach Anspruch 11,
wobei der erste Koppelbereich (160) zwischen dem ersten Bahnbereich (150) und dem zweiten Bahnbereich (152) angeordnet ist, der zweite Koppelbereich (162) zwischen dem ersten Bahnbereich (150) und dem dritten Bahnbereich (154) angeordnet ist und der dritte Koppelbereich (164) zwischen dem ersten Bahnbereich (150) und dem vierten Bahnbereich (156) angeordnet ist.

## Revendications

1. Ensemble d'éléments de batterie (10), comprenant :
une ailette de refroidissement (40, 42) ayant un tube (82) et une feuille thermoconductrice flexible (84) disposée sur le tube (82) ;
le tube (82) ayant des première, deuxième et troisième parties de tube (90, 92, 94) en communication fluidique les unes avec les autres, les première et deuxième parties de tube (90, 92) étant parallèles l'une à l'autre, la troisième partie de tube (94) étant perpendiculaire aux première et deuxième parties de tube (90, 92) et s'étendant entre les première et deuxième parties de tube (90, 92) ;
la feuille thermoconductrice flexible (84) étant couplée à au moins les première et deuxième parties de tube (90, 92) et ayant une première partie de feuille (150) s'étendant entre les première et deuxième parties de tube (90, 92) ; et
un élément de batterie (30, 32) disposé contre la première partie de feuille (150) de la feuille thermoconductrice flexible (84) de l'ailette de refroidissement (40, 42),
dans lequel
la feuille thermoconductrice flexible (84) inclut une couche adhésive (132) disposée sur la feuille, et est disposée autour d'une surface externe de la première partie de tube (90) et est couplée à la première partie de tube (90) à l'aide de la couche adhésive (132),
la feuille thermoconductrice flexible (84) est en outre disposée autour d'une surface externe de la deuxième partie de tube (92) et est couplée à la deuxième partie de tube (92) à l'aide de la couche adhésive (132),
**caractérisé en ce que**
la feuille thermoconductrice flexible (84) inclut en outre des deuxième et troisième parties de feuille (152, 154) s'étendant respectivement des première et deuxième parties de tube (90, 92), qui sont couplées à la première partie de feuille (150) à l'aide de la couche adhésive (132),
la feuille thermoconductrice flexible (84) est en outre disposée autour d'une surface externe de la troisième partie de tube (94) et est couplée à la troisième partie de tube (94) à l'aide de la couche adhésive (132), et
la feuille thermoconductrice flexible (84) inclut en outre une quatrième partie de feuille (156) qui s'étend de la troisième partie de tube (94) et est couplée à la première partie de feuille (150) à l'aide de la couche adhésive (132).

2. Ensemble d'éléments de batterie (10) selon la revendication 1, dans lequel la feuille thermoconductrice flexible (84) est configurée pour transférer une énergie thermique de l'élément de batterie (30, 32) au tube (82).

3. Ensemble d'éléments de batterie (10) selon la revendication 2, dans lequel le tube est configuré pour transférer au moins une partie de l'énergie thermique à un liquide ou à un réfrigérant s'écoulant à travers le tube (82).

4. Ensemble d'éléments de batterie (10) selon la revendication 1, dans lequel la feuille thermoconductrice flexible (84) est disposée autour de toute une surface externe de la première partie de tube (90).

5. Ensemble d'éléments de batterie (10) selon la revendication 1, dans lequel le tube (82) est un tube en aluminium.

6. Ensemble d'éléments de batterie (10) selon la revendication 1, dans lequel la première partie de feuille (150) est dimensionnée pour recouvrir toute une surface latérale généralement de forme rectangulaire de l'élément de batterie (30, 32).

7. Ensemble d'éléments de batterie (10) selon la revendication 1, dans lequel la feuille thermoconductrice flexible (84) a une rugosité moyenne dans une plage de 0,02032 à 0,1016 µm (0,8 à 4,0 micropouces).

8. Ensemble d'éléments de batterie (10) selon la revendication 1, comprenant en outre des première et seconde portions de cadre de forme rectangulaire, l'ailette de refroidissement (40, 42) et l'élément de batterie (30, 32) étant disposés entre les première et seconde portions de cadre.

9. Ensemble d'éléments de batterie (10) selon la revendication 1, comprenant en outre des quatrième et cinquième parties de tube (96, 98) s'étendant respectivement des première et deuxième parties de tube (90, 92), les quatrième et cinquième parties de tube (96, 98) étant respectivement perpendiculaires aux première et deuxième parties de tube (90, 92).

10. Ensemble d'éléments de batterie (10) selon la revendication 9, comprenant en outre des sixième et septième parties de tube (100, 102) s'étendant respectivement des quatrième et cinquième parties de tube (96, 98), les sixième et septième parties de tube (100, 102) étant respectivement perpendiculaires aux quatrième et cinquième parties de tube (96, 98).

11. Procédé de fabrication d'une ailette de refroidissement (40, 42) d'un ensemble d'éléments de batterie (10) selon la revendication 1, comprenant :
la fourniture (180) d'un tube (82) ayant au moins des première, deuxième et troisième parties de tube (90, 92, 94) en communication fluidique les unes avec les autres, les première et deuxième parties de tube (90, 92) étant parallèles l'une à l'autre, la troisième partie de tube (94) étant perpendiculaire aux première et deuxième parties de tube (90, 92) et s'étendant entre les première et deuxième parties de tube (90, 92) ;
la fourniture (182) d'une feuille thermoconductrice flexible (84) ayant des première, deuxième et troisième parties de couplage (160, 162, 164), et des première, deuxième, troisième et quatrième parties de feuille (150, 152, 154, 156) ;
le couplage (184) de la première partie de couplage (160) autour d'une surface externe de la première partie de tube (90) à l'aide de la couche adhésive (132), et le couplage de la deuxième partie de couplage (162) autour d'une surface externe de la deuxième partie de tube (92) à l'aide de la couche adhésive (132) de sorte que la première partie de feuille (150) s'étend entre les première et deuxième parties de tube (90, 92) ;
le couplage (186) de la troisième partie de couplage (164) autour d'une surface externe de la troisième partie de tube (94) à l'aide de la couche adhésive (132) ; le couplage (188) des deuxième, troisième et quatrième parties de feuille (152, 154, 156) à la première partie de feuille (150) à l'aide de la couche adhésive (132).

12. Procédé selon la revendication 11, dans lequel la première partie de couplage (160) est disposée entre la première partie de feuille (150) et la deuxième partie de feuille (152), la deuxième partie de couplage (162) est disposée entre la première partie de feuille (150) et la troisième partie de feuille (154), et la troisième partie de couplage (164) est disposée entre la première partie de feuille (150) et la quatrième partie de feuille (156).
